Europäisches Patentamt

European Patent Office

Office européen des brevets

(19)

(11) Veröffentlichungsnummer : **0 343 143 B1**

(12)

# EUROPÄISCHE PATENTSCHRIFT

(45) Veröffentlichungstag der Patentschrift :
23.06.93 Patentblatt 93/25

(51) Int. Cl.$^5$ : **G01N 21/35, G01M 15/00**

(21) Anmeldenummer : **89890111.1**

(22) Anmeldetag : **18.04.89**

(54) **Verfahren zur Messung des Lambda und/oder Luft-Kraftstoffverhältnisses und Einrichtung zur Durchführung des Verfahrens.**

Die Akte enthält technische Angaben, die nach dem Eingang der Anmeldung eingereicht wurden und die nicht in dieser Patentschrift enthalten sind.

(30) Priorität : **17.05.88 AT 1289/88**

(43) Veröffentlichungstag der Anmeldung :
**23.11.89 Patentblatt 89/47**

(45) Bekanntmachung des Hinweises auf die Patenterteilung :
**23.06.93 Patentblatt 93/25**

(84) Benannte Vertragsstaaten :
**DE FR GB IT**

(56) Entgegenhaltungen :
**EP-A- 0 094 374**
**EP-A- 0 238 871**
**DE-A- 1 948 192**
**DE-A- 2 557 508**

(73) Patentinhaber : **AVL Gesellschaft für Verbrennungskraftmaschinen und Messtechnik mbH.Prof.Dr.Dr.h.c. Hans List Kleiststrasse 48 A-8020 Graz (AT)**

(72) Erfinder : **Krempl, Peter W., Dr. Kainbach 211 A-8047 Graz/Ragnitz (AT)**
Erfinder : **Schiefer, Erich Josef, Dr. Neulassing 17 A-8900 Selzthal (AT)**
Erfinder : **Schindler, Wolfgang, Dr. Mariatrosterstrasse 113 A-8043 Graz (AT)**

(74) Vertreter : **Krause, Walter, Dr. Dipl.-Ing. et al Postfach 200 Singerstrasse 8 A-1014 Wien (AT)**

**Beschreibung**

Die Erfindung betrifft ein Verfahren zur Messung von Lambda und/oder des Luft/Kraftstoffverhältnisses von Verbrennungseinrichtungen, insbesonders von Brennkraftmaschinen, durch Messung bzw. Analyse von einzelnen Komponenten des Kraftstoffes, der zur Verbrennung des Kraftstoffes dienenden Umgebungsluft und des Abgases,sowie eine Einrichtung zur Durchführung eines solchen Verfahrens.

Aus der DE-OS 25 57 508 ist ein Verfahren zur Messung verschiedener Abgaskomponenten, insbesondere CO und HC bekannt.

Aufgrund dieser Messungen und einer Messung der $CO_2$-Konzentration kann man Lambda und/oder das Luft/Kraftstoffverhältnis bestimmen (siehe etwa EP-A-238 871, z.B. Spalte 1, Zeilen 19-43). Meßverfahren dieser Art haben allerdings den Nachteil, daß die benötigten Sensoren nur für gefiltertes Abgas geeignet sind, wodurch die Dynamik des Meßvorganges eingeschränkt wird, da schnelle Meßwertänderungen durch die Filterung nur unscharf wiedergegeben werden oder, bei Verwendung sehr kleiner Filtereinheiten, bereits nach sehr kurzer Zeit eine Wartung bzw. ein Austausch des Filters erforderlich ist.

Aufgabe der vorliegenden Erfindung ist es, die angeführten Nachteile der bekannten Verfahren zu vermeiden und ein Verfahren der eingangs genannten Art so auszuführen, daß die erforderlichen Messungen in ungefilterten Abgasen bzw. der Umgebungsluft durchgeführt werden können. Dieses Verfahren soll sich insbesondere zur Messung von Lambda im Bereich von 1 bis 10 (20), d. h., z.B. für Motoren, welche vorzugsweise im Luftüberschußbereich arbeiten, eignen.

Dies wird gemäß der Erfindung durch Verfahren gemäß Ansprüchen 1 oder 3 erreicht.

Bei der Verbrennung von Kraftstoffen auf Kohlenwasserstoffbasis entstehen als Verbrennungsprodukte hauptsächlich $CO_2$ und $H_2O$. Wenn man nun von einer vollständigen Verbrennung des Kraftstoffes ausgeht, ist es im Prinzip möglich, aus dem tatsächlichen $H_2O$-Gehalt des Abgases den Luftüberschuß bei der Verbrennung, d.h. Lambda und/oder das Luft/Kraftstoffverhältnis, zu berechnen, indem man dem gemessenen Wert den theoretischen $H_2O$-Gehalt des Abgases bei stöchiometrischer Verbrennung gegenüberstellt. Eine Ungenauigkeit dieses Verfahrens besteht darin, daß das Abgas auch Wasserdampf enthält, der aus der Luftfeuchte der Umgebungsluft resultiert. Die Genauigkeit der Messung kann nun dadurch erhöht werden, daß die Feuchte der zur Verbrennung herangezogenen Umgebungsluft gemessen, und dieser Meßwert in die Berechnung einbezogen wird. Insbesonders kann dadurch der Wasserdampfgehalt im Abgas durch eine einfache Differenzbildung korrigiert werden.

Lambda ist definiert als das Verhältnis des aktuell bei einem Verbrennungsprozeß vorhandene Luft/Kraftstoffverhältnis zum stöchiometrischen Luft/Kraftstoffverhältnis.

$$\lambda = \frac{\text{Luftmasse/Kraftstoffmasse}_{\text{aktuell}}}{\text{Luftmasse/Kraftstoffmasse}_{\text{stöchiometrisch}}} \quad (1a)$$

Zur Berechnung des Lambda und/oder Luft/Kraftstoff-verhältnis ses wird die Konzentration von Wasserdampf im Abgas für eine stöchiometrische Verbrennung, d.h. Lambda = 1, berechnet. Grundlage für diese Berechnung ist die Analyse des Kraftstoffes, insbesondere das C:H:O Verhältnis. Setzt man C = 1 so gibt H den verhältnismäßigen Anteil der Wasserstoffatome und O der verhältnismäßigen Anteil der Sauerstoffatome in mol/mol C im Kraftstoff an. Für die Berechnung von Lambda ergeben sich folgende Beziehungen:

$$\lambda = \frac{\%H_2O(\lambda = 1)}{\%H_2O(M)} \cdot \frac{Vol(\lambda = 1)}{Vol(M)}, \quad (1b)$$

$$\%H_2O(\lambda = 1) = \frac{100H}{2} / \left[H/2 + C + (H/4 + C - O/2) \cdot \right.$$

$$\left. \cdot (4.762 \cdot \left(\frac{100}{100 - LF}\right) - 1)\right] \qquad (2)$$

$$= 100 \frac{H}{2} p_0 / \left[\left[\frac{H}{4} + \frac{O}{2}\right] p_0 + \frac{H}{4} + C - \frac{O}{2}\right]$$

$$mit \; p_0 = 0.21 \cdot \left[\frac{100 - LF}{100}\right] \; ,$$

$$Vol(\lambda = 1) = 0.79 + 0.21 \cdot (H/2 + C) / (H/4 + C - O/2), \quad (3)$$

$$Vol(\lambda = M) = (Vol(\lambda = 1) - 1) \cdot \frac{\%H_2O(M)}{\%H_2O(\lambda = 1)} + 1, \quad (4)$$

$$L/K\text{-Verh.}(\lambda = 1) = \frac{M_{o2}}{M_K} \left[\frac{H}{4} + C - \frac{O}{2}\right] \cdot \frac{Gew(Luft)}{Gew(O_2)} \; , \quad (5)$$

$$L/K\text{-Verh.}(M) = L/K\text{-Verh.}(\lambda = 1) \cdot \lambda \quad (6)$$

Der zweite Term der Formel (1b) drückt die Änderung des Abgasvolumens durch die Verbrennungsabgase aus. $\%H_2O(\lambda = 1)$ ist der $H_2O$-Gehalt bei stöchiometrischer Verbrennung, $\%H_2O(M)$ ist der Wert des durch die Verbrennung von Kraftstoff mit Luftsauerstoff entstandenen Wasserdampfes im Abgas. Dieser Wert wird durch Korrektur des Meßwertes der Gesamtkonzentration von Wasserdampf im Abgas mit der Wasserdampfkonzentration der Verbrennungsluft gewonnen. $p_o$ ist der Anteil von $O_2$ in Vol%/100 in der feuchten Umgebungsluft. LF ist die absolute Feuchte der Umgebungs- oder Versorgungsluft in Vol%$H_2O$. $M_{o2}$ und $M_K$ sind die Molekulargewichte des Sauerstoffmoleküls O und des verwendeten Kraftstoffes. Gew(Luft) und Gew($O_2$) sind das Gewicht der Umgebungs- oder Versorgungsluft bzw. das Gewicht des Sauerstoffanteils davon pro Norm Volumseinheit.

Die Formeln (1) bis (6) gelten für Kraftstoffe mit und ohne Sauerstoffanteil. Ein Vorhandensein von Sauerstoff im Kraftstoff, ist beispielsweise bei Kraftstoff auf Alkoholbasis oder bei Zusätzen von Alkohol der Fall. Die Formeln (3) und (4) geben näherungsweise die Abgasvolumina bei $\lambda = 1$ und $\lambda = M$ an. Anhand der Formeln (5) und (6) kann das Luft/Kraftstoffverhältnis berechnet werden.

Vorzugsweise erfolgt die Messung der Wasserdampfkonzentration durch die Bestimmung der Absorption von elektromagnetischer Strahlung in einem Spektralbereich von 2.4 bis 2.8 oder alternativ von 1.8 bis 2 μm, wobei das Abgas eine Meßküvette und die Umgebungsluft bzw. das Versorgungsgas, welches zur Verbrennung des Kraftstoffes dient, eine Referenzküvette durchströmt. Ein solches Verfahren bietet nicht nur genaue, sondern auch sehr dynamische Meßwerte, da einerseits die Messung durch Absorption von elektromagnetischer Strahlung an sich präzise und dynamisch ist und weil andererseits die Messung im ungefilterten Abgas möglich ist, wodurch keinerlei Verfälschung oder Verzögerung durch etwaige Abgasfilter auftreten kann.

Weiters kann durch eine einfache Differenzmessung der Wasseranteil der Umgebungsluft bei der Abgasmessung berücksichtigt werden. In den genannten Spektralbereichen wird die Extinktion im wesentlichen von Wasserdampf verursacht, während die anderen Verbrennungsgase nur unwesentliche Beiträge liefern. Daher wird die Messung nicht durch andere Abgaskomponenten verfälscht.

In einer bevorzugten Ausführungsvariante der Erfindung ist vorgesehen, daß die Messung der Wasserdampfkonzentration mittels eines Interferenzfilters im Bandengebiet des $H_2O$ mit einer Zentralwellenlänge von 2.55 bis 2.63 μm und einer Halbwertsbreite von 2% bis 5% durchgeführt wird, das einen 5% Cutoff-Wert bei einer Wellenlänge von $\leq$ 2.65 μm besitzt. Solche Interferenzfilter haben sich als besonders geeignet für die $H_2O$-Messung herausgestellt, da sie eine vernachlässigbar geringe Querkorrelation zu $CO_2$ aufweisen, d.h. eine schwankende Menge von $CO_2$ im Abgas beeinflußt die Messung des Wasserdampfgehaltes nicht. Weiters weisen solche Filter nur geringe Nichtlinearitäten in der Absorption auf, wobei in diesem Bandengebiet die Nichtlinearität ca. 10% für $H_2O$-Konzentrationen von 0 bis 20 Vol% im Abgas beträgt, und kein Einfluß der Temperatur auf die Nichtlinearität vorhanden ist.

Vorteilhafterweise ist vorgesehen, daß der Meßwert der Wasserdampfkonzentration des Abgases durch eine Messung der in der Probe enthaltenen Kohlenstoffpartikelkonzentration korrigiert wird. Im Abgas befindliche Kohlenstoffpartikel, wie z.B. Ruß, verursachen im gesamten für die Messungen interessanten Infrarotstrahlungsbereich eine bestimmte Extinktion, wodurch Meßwerte, die auf der Absorption von elektromagnetischer Strahlung beruhen, verfälscht werden können. Ist nun die Gesamtmasse der Kohlenstoffpartikel in der Probe bekannt, so kann man mittels des Absorptionskoeffizienten des Kohlenstoffes die einzelnen Meßwerte korrigieren.

Insbesonders ist vorteilhaft, wenn zur Bestimmung der Gesamtmasse der Kohlenstoffpartikel die Infrarottransmission im Spektralbereich von 3.8 bis 4.15 μm festgestellt wird. In die sem Spektralbereich haben die anderen bei der Verbrennung entstehenden Abgaskomponenten keine oder nur eine vernachlässigbar geringe Absorption, sodaß die Masse der Kohlenstoffpartikel präzise bestimmt werden kann.

Weiters ist vorteilhaft, wenn zusätzlich der Anteil der unverbrannten Kohlenwasserstoffe im Abgas gemessen wird, wobei der Anteil der unverbrannten Kohlenwasserstoffe in die Berechnung des Lambda oder Luft/Kraftstoffverhältnisses einbezogen wird. Die Präzision der Meßwerte kann dann dadurch erhöht werden, daß bei der Berechnung des Lambda oder Luft/Kraftstoffverhältnisses der Anteil der Kohlenwasserstoffe im Abgas berücksichtigt wird.

Vorzugsweise wird der Anteil der unverbrannten Kohlenwasserstoffe durch die Bestimmung der Infrarotabsorption im Abgas ermittelt, wobei ein Spektralbereich verwendet wird, in dem die verschiedenen Komponenten der Kohlenwasserstoffe etwa die gleiche Extinktion aufweisen, z.B. bei $3.465 \pm 0.05$ μm wobei zur Korrektur dieser Messung die von den Kohlenstoffpartikeln hervorgerufene Absorption herangezogen wird. In dem genannten Frequenzband haben die verschiedenen Komponenten des Gemisches, aus dem sich die unverbrannten Kohlenwasserstoffe zusammensetzen, etwa die gleiche Extinktion. Dadurch kann ein von der Zusammensetzung der unverbrannten Kohlenwasserstoffe weitgehend unabhängiger Meßwert gewonnen werden. Die Genauigkeit auch dieses Meßwertes kann durch die Berücksichtigung der von den im Abgas befindlichen Kohlenstoffpartikeln bei dieser Wellenlänge hervorgerufenen Absorption verbessert werden.

Vorzugsweise wird zusätzlich der Anteil von CO im Abgas gemessen, wobei der Anteil von CO in die Berechnung des Lambda oder Luft/Kraftstoffverhältnisses einbezogen wird.Soll der Meßbereich auch auf Lambdawerte $\leq$ 1 ausgedehnt werden, kann man nicht mehr von einer vollständigen Verbrennung ausgehen. Die Präzision der Messung kann nun speziell in Bereichen kleinerer Lambdawerte ($\lambda \leq$ 1) dadurch verbessert werden, daß das aus der unvollständigen Verbrennung resultierende CO im Abgas bei der Berechnung des Lambda oder Luft/Kraftstoffverhältnisses berücksichtigt wird, da zumindest in einem Bereich von $\lambda \leq$ 1 der CO-Meßwert mit dem $H_2$-Anteil des Abgases korreliert.

Insbesonders ist vorteilhaft, wenn die Erfassung des CO-Gehaltes des Abgases durch die Messung der Infrarottransmission vorzugsweise im Spektralbereich von 4.4 bis 4.9 μm erfolgt, wobei dieser Wert mit der Absorption der Kohlenstoffpartikel bei dieser Wellenlänge korrigiert wird. In diesem Spektralbereich ist die Extinktion von CO vorherrschend gegenüber der Extinktion der anderen Verbrennungsgase. Es ist angezeigt, daß auch dieser Meßwert mit dem Anteil der Kohlenstoffpartikel an der Extinktion korrigiert wird.

In einer bevorzugten Ausführungsvariante wird die absolute Feuchte der Umgebungsluft mittels eines zusätzlichen Feuchte-Meßwertgebers gemessen und dieser Meßwert zur Korrektur der sich aus der Luftfeuchte der Umgebungsluft ergebenden sekundären nichtlinearen Meßwertänderungen der $H_2O$-Konzentrationsmeßwerte bzw. der daraus berechneten Meßwerte des Lambda oder Luft/Kraftstoffverhältnisses verwendet. Bei der Berücksichtigung der Umgebungsluftfeuchte durch die Spülung der Referenzküvette mit Umgebungsluft, die zur Verbrennung des Kraftstoffes dient, wird in erster Näherung angenommen, daß die Extinktion linear mit der Wasserdampfkonzentration ansteigt. Sekundär ergibt sich jedoch ein geringer Einfluß auf die Meßgenauigkeit dadurch, daß die Eichkurve der Abhängigkeit des Extinktionsmeßwertes von der Konzentration des Wasserdampfes im Meßbereich ca. 10% nichtlinear ist. Dieser Einfluß kann durch die Einbeziehung der Luftfeuchte in einem Korrekturalgorithmus kompensiert werden. Diese Luftfeuchtemessung kann mittels eines bekannten Luftfeuchtemeßsensors durchgeführt werden. Die Korrektur der restlichen nichtlinearen Abhängigkeit des Extinktionsmeßwertes vom $H_2O$-Gehalt der Umgebungsluft oder der Versorgungsluft für die Kraftstoffver-

EP 0 343 143 B1

brennung kann durch ein Polynom zweiten Grades erfolgen.

Weiters betrifft die Erfindung Einrichtungen zur Durchführung der Verfahren gemäß Ansprüchen 12, 13.

Bei Ausführung gemäß Anspruch 13 kann mit einer Strahlungsquelle sowie mit einem Detektor gearbeitet werden. Außerdem können durch das alternierende Durchstrahlen der Meßküvette und der Referenzküvette Meßfehler vermieden werden, die auf der unterschiedlichen Empfindlichkeit von mehreren Detektoren beruhen.

In der weiteren Ausgestaltung der Erfindung ist vorgesehen, daß der Filter mehrere Filtereinsätze aufweist, von denen einer durch Zentralwellenlänge und Halbwertsbreite auf die Messung der Wasserdampfkonzentration abgestimmt ist, wobei dieser Filtereinsatz vorzugsweise im Wellenlängenbereich von 2,4 bis 2,8 μm oder alternativ im Bereich von 1,8 bis 2 μm durchlässig ist, und wobei mindestens ein anderer Filtereinsatz vorgesehen ist, der auf die Messung einer anderen Gaskomponente wie CO, HC oder C-Partikel abgestimmt ist, welche andere Messung in einem Korrekturglied, das zwischen Auswerteeinheit und Recheneinheit angeordnet ist, zur Korrektur des Meßwertes der Wasserdampfkonzentration bzw. des λ-Wertes dient. Durch die Berücksichtigung weiterer Abgaskomponenten kann die Meßgenauigkeit erhöht werden.

Wenn die Filtereinsätze auf einem Chopper oder einem Filterrad angeordnet sind, können Filtereinsätze, die auf die Messung der verschiedenen Abgaskomponenten abgestimmt sind, hintereinander in den Strahlungsweg gebracht werden. Es können aber auch die Filtereinsätze direkt auf einem aus mehreren Segmenten bestehenden Detektor montiert sein und ein Chopper für die alternierende Messung zwischen Meßküvette und Referenzküvette vorgesehen sein. Dadurch kann der Aufbau der Einrichtung vereinfacht und insbesonders die Zuverlässigkeit der Einrichtung erhöht werden.

In einer weiteren Ausführungsvariante der Erfindung ist vorgesehen, daß ein Filtereinsatz durch Zentralwellenlänge und Halbwertsbreite auf die Messung der Gesamtmasse der Kohlenstoffpartikel abgestimmt ist und vorzugsweise in einem Wellenlängenbereich von 3,8 bis 4,15 μm durchlässig ist, wobei dieser Filtereinsatz eine Zentralwellenlänge von 3,9 bis 4,1 μm und eine Halbwertsbreite von 2 bis 5 % aufweist. Die im Abgas vorhandenen Kohlenstoffpartikel verursachen im gesamten Infrarotspektrum eine gewisse Extinktion. Dadurch können die Meßwerte für die Gaskomponenten des Abgases verfälscht werden. Im Spektralbereich um etwa 4 μm gibt es keine nennenswerten Absorptionsbanden von anderen Komponenten des Abgases, sodaß die Infrarotabsorption in diesem Bereich ein Maß für die Masse der Kohlenstoffpartikel ist. Mit diesem Meßwert können die anderen Meßwerte, und insbesonders der Meßwert der Wasserdampfkonzentration korrigiert werden.

Weiters kann vorgesehen sein, daß ein Filtereinsatz durch Zentralwellenlänge und Halbwertsbreite auf die Messung des Anteils der unverbrannten Kohlenwasserstoffe abgestimmt und vorzugsweise bei einer Wellenlänge durchlässig ist, bei der die verschiedenen Komponenten der Kohlenwasserstoffe etwa die gleiche Extinktion aufweisen, wie etwa bei 3,465 μm, wobei dieser Filtereinsatz eine Zentralwellenlänge von 3,465 ± 0,05 μm und eine Halbwertsbreite von 2 bis 5 % aufweist. Bei einigen Betriebszuständen von Verbrennungseinrichtungen kann es zu einem nicht vernachlässigbaren Ausstoß von unverbrannten Kohlenwasserstoffe kommen. In dem genannten Frequenzband haben die verschiedenen Komponenten des Gemisches, aus dem sich die unverbrannten Kohlenwasserstoffe zusammensetzen, etwa die gleiche Extinktion. Dadurch kann ein von der Zusammensetzung der unverbrannten Kohlenwasserstoffe weitgehend unabhängiger Meßwert gewonnen werden. Die Genauigkeit auch dieses Meßwertes kann durch die Berücksichtigung der von den im Abgas befindlichen Kohlenstoffpartikeln bei dieser Wellenlänge hervorgerufenen Absorption verbessert werden.

Es ist vorteilhaft, wenn ein Filtereinsatz durch Zentralwellenlänge und Halbwertsbreite auf die Messung des Anteils von CO abgestimmt und vorzugsweise in einem Wellenlängenbereich von 4,4 bis 4,9 μm durchlässig ist, wobei dieser Filtereinsatz eine Zentralwellenlänge von 4,5 bis 4,8 μm und eine Halbwertsbreite von 2 bis 5 % aufweise. Speziell im Bereich kleiner Lambdawerte ($\lambda \leqq 1$), bei denen es zwangsläufig zu einem Ausstoß von CO kommt, erhöht die Korrektur der Meßwerte der Wasserdampfkonzentration mittels des CO-Gehaltes des Abgases die Genauigkeit.

Weiters kann auch ein Meßwertgeber vorgesehen sein, der mit dem Korrekturglied und vorzugsweise mit einer weiteren Auswerteeinheit verbunden ist und Meßwerte, wie Umgebungsluftdruck, Umgebungsluftfeuchte, Temperatur in der Meßküvette oder der Referenzküvette, liefert. Die Messung weiterer Größen kann die Einflüsse der Schwankungen der Dichte der Gase zufolge von Temperatur- oder Druckänderungen erfassen und deren Einflüsse auf die Messung berücksichtigen und korrigieren.

Es kann ein konstante physikalische Parameter liefernder Geber vorgesehen sein, der mit dem Korrekturglied verbunden ist. Dadurch ist eine schnelle Anpassung der Einrichtung an verschiedene Einsatzbedingungen möglich.

Nach einem besonderen Merkmal der Erfindung ist vorgesehen, daß der Filter bzw. der Filtereinsatz zur Messung der Wasserdampfkonzentration als Interferenzfilter im Bandengebiet des $H_2O$ mit einer Zentralwellenlänge von 2,55 bis 2,63 μm und einer Halbwertsbreite von 2% bis 5% und einem 5% Cutoff-Wert bei einer

5

Wellenlänge von $\leq 2{,}65$ µm ausgebildet ist. Solche Interferenzfilter haben sich als besonders geeignet für die $H_2O$-Messung herausgestellt, da sie eine vernachlässigbar geringe Querkorrelation zu $CO_2$ aufweisen, d.h. eine schwankende Menge von $CO_2$ im Abgas beeinflußt die Messung des Wasserdampfgehaltes nicht. Weiters weisen solche Filter nur geringe Nichtlinearitäten in der Absorption auf, wobei in diesem Bandengebiet die Nichtlinearität ca. 10% für $H_2O$-Konzentrationen von 0 bis 20 Vol% im Abgas beträgt.

Im folgenden wird die Erfindung anhand der Zeichnungen näher erläutert. Es zeigen:

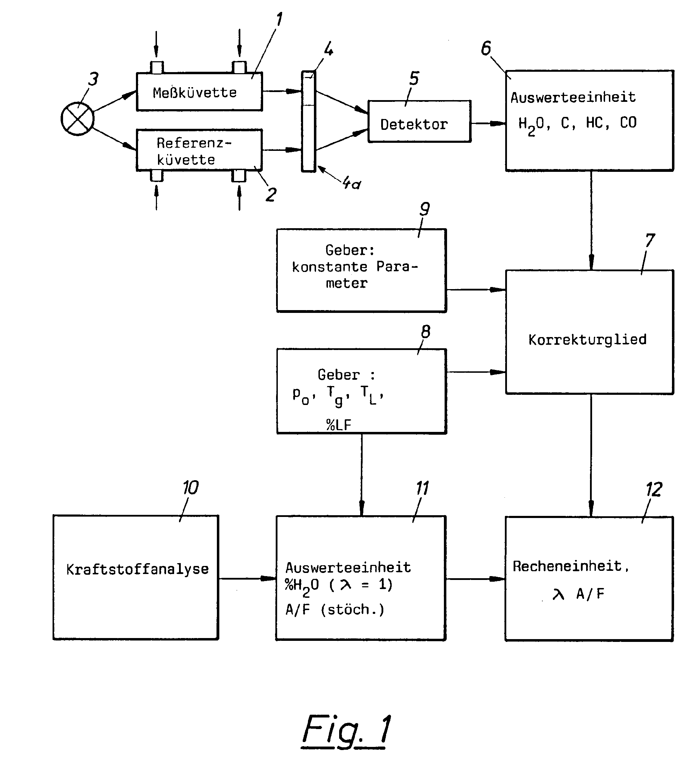

Fig. 1 schematisch den Ablauf des erfindungsgemäßen Verfahrens bzw. den Aufbau der erfindungsgemäßen Einrichtung;

Fig. 2 die Eichkurve des Interferenzfilters $H_2O$ 001; die Abhängigkeit der Extinktion von der $H_2O$-Konzentration in Vol%; und

Fig. 3 einen Vergleich von Lambdameßwerten mit verschiedenen Meßmethoden.

Das Verbrennungsabgas durchströmt eine Meßküvette 1. Gleichzeitig durchströmt Umgebungsluft oder die Versorgungsluft, welche zur Verbrennung des Kraftstoffes verwendet wird, die Referenzküvette 2. Elektromagnetische Strahlung, die in einer elektromagnetischen Strahlungsquelle 3 erzeugt wird, durchstrahlt zuerst die Küvetten 1 und 2 und anschließend einen Filter, der nur für einen engen Spektralbereich durchlässig ist, und in einem Filterrad oder Chopper 4a montiert ist. Wenn außer der Messung der Wasserdampfkonzentration auch noch Messungen der Kohlenstoffpartikelmasse, des HC und/oder CO-Gehaltes vorgesehen sind, wird ein Filterrad oder ein Chopper 4a mit mehreren Filtereinsätzen 4 vorgesehen, die jeweils für die zu messende Abgaskomponente abgestimmt sind. Die Messung der Intensitäten der die Küvetten 1 und 2 und die Filter durchdringenden elektromagnetischen Strahlung erfolgt nacheinander, sodaß beispielsweise bei Vorliegen von drei Interferenzfiltern (für $H_2O$, C, HC) sieben Meßwerte, je drei Werte für die Meßküvette 1 und die Referenzküvette 2 und ein Meßwert, wenn keine Strahlung durch eine der beiden Küvetten dringt, vorliegen. In einem Detektor 5 werden die Intensitäten der einfallenden Strahlung gemessen. Eine Auswerteeinheit 6 ermittelt durch Differenzbildung zwischen den Intensitäten in der Meßküvette und in der Referenzküvette den aus dem Verbrennungsprozeß resultierenden $H_2O$-Anteil des Abgases. In einem Korrekturglied 7 werden die Meßwerte für den $H_2O$-, den HC- und den CO-Gehalt im Abgas mit Hilfe der Kohlenstoffpartikelmessung korrigiert. Als weitere Meßwerte gehen in die Korrektur die Temperatur $T_k$ der Meßküvette 1, die Temperatur $T_1$ der Referenzküvette 2, der Umgebungsluftdruck $p_o$ und gegebenenfalls die externe Luftfeuchtigkeitsmessung %LF ein, welche Werte in einem Geber 8 bereitgestellt werden. Darüber hinaus werden für die Korrektur physikalische Konstanten und Parameter benötigt, die aus einem Geber 9 in das Korrekturglied 7 eingespeist werden. Aus der Analyse der Kraftstoffzusammensetzung 10 werden in einer Auswerteeinheit 11 die Referenzwerte %$H_2O(\lambda = 1)$, und das Luft/Kraftstoffverhältnis (A/F stöch.) in g/g für die stöchiometrische Verbrennung berechnet.

In die Referenzwertberechnung gehen auch die Meßwerte des Gebers 8 ein. In einer Recheneinheit 12 wird schließlich der momentane tatsächliche $\lambda$-Wert und das dazugehörige Luft/Kraftstoffverhältnis A/F ermittelt.

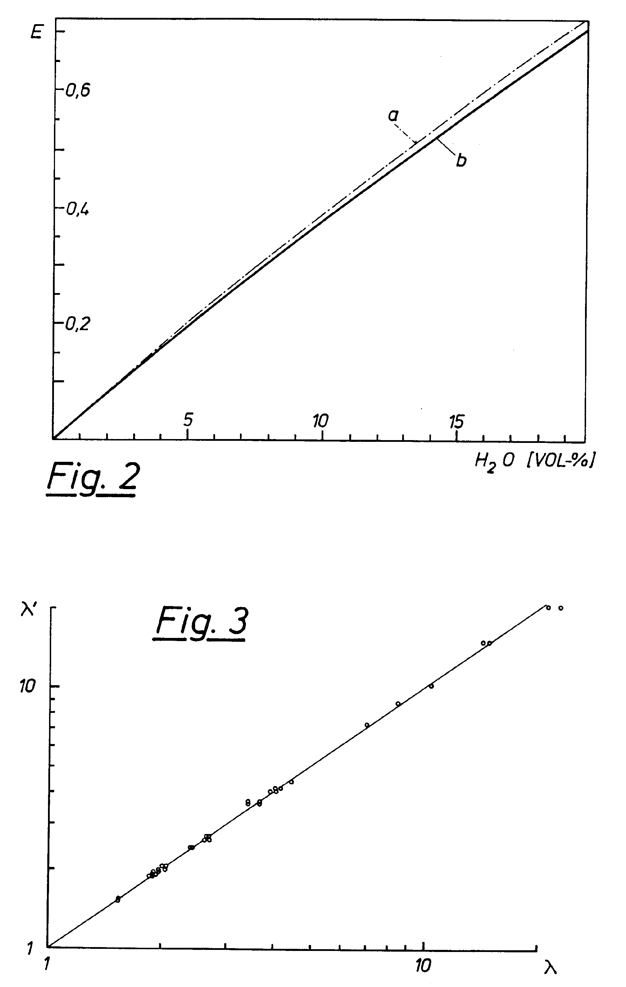

In Fig. 2 ist die Abhängigkeit des Extinktionsmeßwertes von der $H_2O$-Konzentration im Abgas für ein Interferenzfilter mit einer Zentralwellenlänge von 2.6 µm und einer Halbwertsbreite von 4 % und einem 5 % Cutoff-Wert bei einer Wellenlänge $\leq 2{,}65$ µm darstellt. Auf der Ordinate ist der Wasserdampfgehalt in Vol%, und auf der Abszisse die Extinktion als Bruchzahl aufgetragen. Kurve a wurde dabei mit trockener Verbrennungsluft, also 0% Luftfeuchte aufgenommen. Kurve b zeigt die sich ergebende Abhängigkeit bei Vorhandensein von 3 Vol% Wasserdampf in der Umgebungsluft, wobei im Extinktionsmeßwert auf der Abszisse infolge der Differenzmessung mit der Referenzküvette der Wasserdampfgehalt der Umgebungsluft nicht mehr enthalten ist. Die Vol% $H_2O$ der Meßkurve b geben nur die durch die Verbrennung von Kraftstoff mit Luft entstandenen Abgasanteile an.

Fig. 3 zeigt die sich ergebende Korrelation zwischen Lambdameßwerten, die mittels der Formeln 1 bis 4 aus den $H_2O$-Konzentrationsmeßwerten berechnet wurden, und den sich aus dem Kraftstoffverbrauch und der Ansaugluftmengenmessung ergebenden Lambdameßwerten. Auf der Ordinate sind hierbei die Meßwerte, die mit dem erfindungsgemäßen Verfahren gewonnen wurden, aufgetragen. Auf der Abszisse sind die aus Kraftstoffverbrauch und Ansaugluftmengenmessung berechneten Werte gegenübergestellt. Die typische Meßwertabweichung beträgt ca. $\pm$ 3,5% des Meßwertes für Lambdawerte von 1 bis 10.

Das erfindungsgemäße Verfahren und die entsprechende Einrichtung haben sich in den Testläufen nicht nur als einfach und robust, sondern als durchaus präzise erwiesen, wobei besonders der Wegfall einer Abgasfilterung und die schnelle Ansprechzeit auch bei langandauernden Meßserien vorteilhaft ist.

## Patentansprüche

1. Verfahren zur Messung des Lambda und/oder Luft/Kraftstoffverhältnisses von Verbrennungseinrichtungen, insbesonders von Brennkraftmaschinen, durch Messung bzw. Analyse von einzelnen Komponenten des Kraftstoffes, der zur Verbrennung des Kraftstoffes dienenden Umgebungsluft oder des Versorgungsgases, welches zur Verbrennung des Kraftstoffes dient, und des Abgases, **dadurch gekennzeichnet**, daß die Wasserdampfkonzentration des Abgases in an sich bekannter Weise, wie etwa durch Infrarotabsorption, gemessen wird, und daß Lambda und/oder das Luft/Kraftstoffverhältnis mittels dieses Meßwertes in Verbindung mit einer chemischen Elementaranalyse der Kraftstoffkomponente, die das C:H:O-Verhältnis des Kraftstoffes zeigt, sowie in Verbindung mit dem Sauerstoffanteil der Umgebungsluft oder des Versorgungsgases, welches zur Verbrennung des Kraftstoffes dient, ermittelt wird, wobei die Berechnung im wesentlichen auf einem Vergleich des gemessenen Wertes der Wasserdampfkonzentration des Abgases mit einem aus besagtem C:H:O-Verhältnis und besagtem Sauerstoffanteil berechneten, fiktiven, sich bei stöchiometrischer Verbrennung einstellenden Wert der Wasserdampfkonzentration beruht.

2. Verfahren nach Anspruch 1, **dadurch gekennzeichnet**, daß zusätzlich die Wasserdampfkonzentration der Umgebungsluft oder des Versorgungsgases, welches zur Verbrennung des Kraftstoffes dient, gemessen wird und daß dieser Wert bei der Berechnung von Lambda berücksichtigt wird.

3. Verfahren zur Messung des Lambda und/oder Luft/Kraftstoffverhältnisses von Verbrennungseinrichtungen, insbesonders von Brennkraftmaschinen, durch Messung bzw. Analyse von einzelnen Komponenten des Kraftstoffes, der zur Verbrennung des Kraftstoffes dienenden Umgebungsluft oder des Versorgungsgases, welches zur Verbrennung des Kraftstoffes dient, und des Abgases, **dadurch gekennzeichnet**, daß die Differenz der Wasserdampfkonzentration des Abgases zu der der Umgebungsluft oder des Versorgungsgases, welches zur Verbrennung des Kraftstoffes dient, durch die Bestimmung der Absorption von elektromagnetischer Strahlung in einem Spektralbereich von 2.4 bis 2.8 oder alternativ von 1.8 bis 2 $\mu$m gemessen wird, wobei das Abgas eine Meßküvette (1) und die Umgebungsluft oder das Versorgungsgas, welches zur Verbrennung des Kraftstoffes dient, eine Referenzküvette (2) durchströmt, und daß Lambda und/oder das Luft/Kraftstoffverhältnis mittels dieses Meßwertes in Verbindung mit einer chemischen Elementaranalyse der Kraftstoffkomponente, die das C:H:O-Verhältnis des Kraftstoffes zeigt, sowie in Verbindung mit dem Sauerstoffanteil der Umgebungsluft oder des Versorgungsgases, welches zur Verbrennung des Kraftstoffes dient, ermittelt wird, wobei die Berechnung im wesentlichen auf einem Vergleich des gemessenen Wertes der Wasserdampfkonzentration mit einem aus besagtem C:H:O-Verhältnis und besagtem Sauerstoffanteil berechneten, fiktiven, sich bei stöchiometrischer Verbrennung einstellenden Wert der Wasserdampfkonzentration beruht.

4. Verfahren nach Anspruch 3, **dadurch gekennzeichnet**, daß die Messung der Wasserdampfkonzentration mittels eines Interferenzfilters im Bandengebiet des $H_2O$ mit einer Zentralwellenlänge von 2.55 bis 2.63 $\mu$m und einer Halbwertsbreite von 2% bis 5% durchgeführt wird, welcher Filter einen 5% Cutoff-Wert bei einer Wellenlänge von $\leq$ 2.65 $\mu$m besitzt.

5. Verfahren nach einem der Ansprüche 1 bis 4, **dadurch gekennzeichnet**, daß der Meßwert der Wasserdampfkonzentration des Abgases durch eine Messung der in der Probe enthaltenen Kohlenstoffpartikelkonzentration korrigiert wird.

6. Verfahren nach einem der Ansprüche 1 bis 5, **dadurch gekennzeichnet,** daß zur Bestimmung der Gesamtmasse der Kohlenstoffpartikel die Infrarottransmission im Spektralbereich von 3.8 bis 4.15 $\mu$m festgestellt wird.

7. Verfahren nach einem der Ansprüche 1 bis 6, **dadurch gekennzeichnet**, daß zusätzlich der Anteil der unverbrannten Kohlenwasserstoffe im Abgas gemessen wird, wobei der Anteil der unverbrannten Kohlenwasserstoffe in die Berechnung des Lambda oder Luft/Kraftstoffverhältnisses einbezogen wird.

8. Verfahren nach Anspruch 7, **dadurch gekennzeichnet**, daß der Anteil der unverbrannten Kohlenwasserstoffe durch die Bestimmung der Infrarotabsorption ermittelt wird, wobei vorzugsweise ein Spektralbereich verwendet wird, in dem die verschiedenen Komponenten der Kohlenwasserstoffe etwa die gleiche Extinktion aufweisen, z.B. bei 3.465 + 0.05 $\mu$m und wobei zur Korrektur dieser Messung die von den Kohlenstoffpartikeln hervorgerufene Absorption herangezogen wird.

9. Verfahren nach einem der Ansprüche 1 bis 8, **dadurch gekennzeichnet**, daß zusätzlich der Anteil von CO im Abgas gemessen wird, wobei der Anteil von CO in die Berechnung des Lambda oder Luft/Kraftstoffverhältnisses einbezogen wird.

10. Verfahren nach Anspruch 9, wobei die Erfassung des CO-Gehaltes des Abgases durch die Messung der Infrarottransmission, vorzugsweise im Spektralbereich von 4.4 bis 4.9 $\mu m$, erfolgt, **dadurch gekennzeichnet**, daß dieser Wert mit der Absorption der Kohlenstoffpartikel bei dieser Wellenlänge korrigiert wird.

11. Verfahren nach einem der Ansprüche 1 bis 10, **dadurch gekennzeichnet**, daß die absolute Feuchte der Umgebungsluft mittels eines zusätzlichen Feuchtemeßwertgebers gemessen wird und dieser Meßwert zur Korrektur der sich aus der Luftfeuchte der Umgebungsluft ergebenden sekundären nichtlinearen Meßwertänderungen der $H_2O$-Konzentrationsmeßwerte bzw. der daraus berechneten Lamda oder Luft/Kraftstoffverhältnisse verwendet wird.

12. Einrichtung zur Durchführung des Verfahrens nach einem der Ansprüche 1, 2 und 5 bis 11, bei der im Strahlungsweg einer elektromagnetischen Strahlungsquelle nacheinander eine vom Abgas der Verbrennungseinrichtung durchströmte Meßküvette (1), ein Filter (4) und schließlich ein die Strahlung der Quelle aufnehmender Detektor (5) vorgesehen sind, **dadurch gekennzeichnet**, daß der Filter durch Zentralwellenlänge und Halbwertsbreite auf die Messung der Wasserdampfkonzentration des Abgases abgestimmt ist, und daß an den Detektor (5) eine Auswerteeinheit (6) zur Bestimmung des $H_2O$-Anteiles des Abgases sowie eine Recheneinheit (12) zur Berechnung des Lambda und/oder Luft/Kraftstoffverhältnisses mittels eines Vergleiches des besagten Meßwertes mit einem fiktiven Wert der Wasserdampfkonzentration bei stöchiometrischer Verbrennung angeschlossen sind, wobei in die Berechnung die chemische Elementaranalyse 'des Kraftstoffes eingeht, die das C:H:O-Verhältnis des Kraftstoffes zeigt, sowie der Sauerstoffanteil der Umgebungsluft oder des Versorgungsgases, welches zur Verbrennung des Kraftstoffes dient.

13. Einrichtung Durchführung des Verfahrens nach einem der Ansprüche 3 bis 11, bei der im Strahlungsweg einer elektromagnetischen Strahlungsquelle nacheinander eine vom Abgas der Verbrennungseinrichtung durchströmte Meßküvette (1), ein Filter (4) und schließlich ein die Strahlung der Quelle aufnehmender Detektor (5) vorgesehen sind, **dadurch gekennzeichnet**, daß eine mit der zur Verbrennung bestimmten Umgebungsluft oder Versorgungsluft gespülte Referenzküvette (2), sowie ein Filterrad oder ein Chopper (4a) vorgesehen sind, wobei die Meßküvette (1) und die Referenzküvette (2) zwischen der elektromagnetischen Strahlungsquelle (3) und dem Filterrad oder Chopper (4a) angeordnet sind, das/der den Strahlengang alternierend durch die Meßküvette (1) und durch die Referenzküvette (2) leitet, und daß eine Auswerteeinheit (6) vorgesehen ist, in der eine Differenzbildung zwischen dem Meßwert für das Abgas und dem Meßwert für die Umgebungsluft oder des Versorgungsgases, welches zur Verbrennung des Kraftstoffes dient, durchgeführt wird, sodaß dadurch die Einflüsse der Umgebungsluftfeuchte auf den Meßwert der Wasserdampfkonzentration bzw. auf Lambda automatisch kompensiert werden, und daß weiters eine Recheneinheit (12) zur Berechnung des Lambda und/oder Luft/Kraftstoffverhältnisses mittels eines Vergleiches des besagten Meßwertes mit einem fiktiven Wert der Wasserdampfkonzentration bei stöchiometrischer Verbrennung angeschlossen ist, wobei in die Berechnung die chemische Elementaranalyse des Kraftstoffes eingeht, die das C:H:O-Verhältnis des Kraftstoffes zeigt, sowie der Sauerstoffanteil der Umgebungsluft oder des Versorgungsgases, welches zur Verbrennung des Kraftstoffes dient, und ferner daß der Filter durch Zentralwellenlänge und Halbwertsbreite auf die Messung der Wasserdampfkonzentration abgestimmt ist, wobei der Filter im Wellenlängenbereich von 2,4 bis 2,8 $\mu m$ oder alternativ im Bereich von 1,8 bis 2 $\mu m$ durchlässig ist.

14. Einrichtung nach einem der Ansprüche 12 oder 13, **dadurch gekennzeichnet**, daß der Filter mehrere Filtereinsätze (4) aufweist, von denen einer durch Zentralwellenlänge und Halbwertsbreite auf die Messung der Wasserdampfkonzentration abgestimmt ist, wobei dieser Filtereinsatz (4) im Wellenlängenbereich von 2,4 bis 2,8 $\mu m$ oder alternativ im Bereich von 1,8 bis 2 $\mu m$ durchlässig ist, und wobei mindestens ein weiterer Filtereinsatz (4) vorgesehen ist, der auf die Messung einer anderen Gaskomponente wie CO, HC oder C-Partikel abgestimmt ist, welche andere Messung in einem Korrekturglied (7), das zwischen Auswerteeinheit (6) und Recheneinheit (12) angeordnet ist, zur Korrektur des Meßwertes der Wasserdampfkonzentration bzw. des Lambda-Wertes dient.

15. Einrichtung nach Anspruch 14, **dadurch gekennzeichnet**, daß ein Filtereinsatz (4) durch Zentralwellenlänge und Halbwertsbreite auf die Messung der Gesamtmasse der Kohlenstoffpartikel abgestimmt ist und vorzugsweise in einem Wellenlängenbereich von 3,8 bis 4,15 $\mu m$ durchlässig ist.

**16.** Einrichtung nach Anspruch 15, **dadurch gekennzeichnet**, daß der Filtereinsatz (4), der auf die Messung der Gesamtmasse der Kohlenstoffpartikel abgestimmt ist, eine Zentralwellenlänge von 3,9 bis 4,1 $\mu$m und eine Halbwertsbreite von 2 bis 5 % aufweist.

**17.** Einrichtung nach einem der Ansprüche 14 bis 16, **dadurch gekennzeichnet**, daß ein Filtereinsatz (4) durch Zentralwellenlänge und Halbwertsbreite auf die Messung des Anteils der unverbrannten Kohlenwasserstoffe abgestimmt und vorzugsweise bei einer Wellenlänge durchlässig ist, bei der die verschiedenen Komponenten der Kohlenwasserstoffe etwa die gleiche Extinktion aufweisen, wie etwa bei 3,465 $\mu$m.

**18.** Einrichtung nach Anspruch 17, **dadurch gekennzeichnet**, daß der Filtereinsatz (4), der auf die Messung des Anteils der unverbrannten Kohlenwasserstoffe abgestimmt ist, eine Zentralwellenlänge von 3,465 $\pm$ 0,05 $\mu$m und eine Halbwertsbreite von 2 bis 5 % aufweist.

**19.** Einrichtung nach einem der Ansprüche 14 bis 18, **dadurch gekennzeichnet**, daß ein Filtereinsatz (4) durch Zentralwellenlänge und Halbwertsbreite auf die Messung des Anteils von CO abgestimmt und vorzugsweise in einem Wellenlängenbereich von 4,4 bis 4,9 $\mu$m durchlässig ist.

**20.** Einrichtung nach Anspruch 19, **dadurch gekennzeichnet**, daß der Filtereinsatz (4), der auf die Messung des Anteils von CO abgestimmt ist, eine Zentralwellenlänge von 4,5 bis 4,8 $\mu$m und eine Halbwertsbreite von 2 bis 5 % aufweist.

**21.** Einrichtung nach einem der Ansprüche 12 bis 20, **dadurch gekennzeichnet**, daß ein Meßwertgeber (8) vorgesehen ist, der mit dem Korrekturglied (7) und vorzugsweise mit einer weiteren Auswerteeinheit (11) verbunden ist und Meßwerte wie Umgebungsluftdruck, Umgebungsluftfeuchte, Temperatur in der Meßküvette (1) oder der Referenzküvette (2) liefert.

**22.** Einrichtung nach einem der Ansprüche 12 bis 21, **dadurch gekennzeichnet**, daß ein konstante physikalische Parameter liefernder Geber (9) vorgesehen ist, der mit dem Korrekturglied (7) verbunden ist.

**23.** Einrichtung nach einem der Ansprüche 12 bis 22, **dadurch gekennzeichnet**, daß der Filter bzw. der Filtereinsatz (4) zur Messung der Wasserdampfkonzentration als Interferenzfilter im Bandengebiet des $H_2O$ mit einer Zentralwellenlänge von 2,55 bis 2,63 $\mu$m und einer Halbwertsbreite von 2% bis 5% und einem 5% Cutoff-Wert bei einer Wellenlänge von $\leqq$ 2,65 $\mu$m ausgebildet ist.

## Claims

**1.** Method of measuring lambda and/or the air/fuel ratio of combustion systems, especially internal combustion engines, i.e. by measuring and/or analysing individual components of the fuel, and the ambient air used for combustion of the fuel or the gas supplied for combustion of the fuel, and the exhaust gas, **<u>characterized in that</u>** the concentration of water vapour in the exhaust gas is measured in a conventional manner, for example by infrared absorption, and that lambda and/or the air/fuel ratio is determined by means of the ensuing measured value combined with an elementary chemical analysis of the fuel components giving the C:H:O ratio of the fuel, and combined with the oxygen component of the ambient air or the gas supplied for fuel combustion, computation being essentially based on a comparison of the value obtained for the concentration of water vapour in the exhaust gas and a fictitious value for the concentration of water vapour, which is derived from the said C:H:O ratio and the said oxygen component for a stoichiometric combustion process.

**2.** Method according to claim 1, **characterized in that** the concentration of water vapour in the ambient air or the gas supplied for combustion of the fuel is measured in addition, and that the ensuing measured value enters into the computation of lambda.

**3.** Method of measuring lambda and/or the air/fuel ratio of combustion systems, especially internal combustion engines, i.e. by measuring and/or analysing individual components of the fuel, and the ambient air used for combustion of the fuel or the gas supplied for combustion of the fuel, and the exhaust gas, **<u>characterized in that</u>** the difference between the concentration of water vapour in the exhaust gas and that in the ambient air or the gas supplied for combustion of the fuel is measured by determining the absorption of electromagnetic radiation in a spectral range of 2.4 to 2.8 $\mu$m, or, alternatively, 1.8 to 2,0 $\mu$m, the exhaust gas passing through a measuring cell (1), and the ambient air or gas supplied for combustion of the fuel passing through a reference cell (2), and that lambda and/or the air/fuel ratio is determined by means of the ensuing measured value combined with an elementary chemical analysis of the fuel components giving the C:H:O ratio of the fuel, and combined with the oxygen component of the ambient air or the gas supplied for fuel combustion, computation being essentially based on a comparison of the value obtained for the concentration of water vapour and a fictitious value for the concentration of water vapour, which is derived from the said C:H:O ratio and the said oxygen component for a stoichiometric combustion process.

4. Method according to claim 3, **characterized in that** the concentration of water vapour is measured by means of an interference filter in the $H_2O$ band range with a central wavelength of 2.55 to 2.63 $\mu$m and a half-band width of 2% to 5%, the said filter having a 5% cut-off value at a wavelength of $\leqq$2.65 $\mu$m.

5. Method according to any of claims 1 to 4, **characterized in that** the value obtained for the concentration of water vapour in the exhaust gas is corrected by measuring the concentration of carbon particles contained in the sample.

6. Method according to any of claims 1 to 5, **characterized in that** for determination of the total mass of carbon particles the infrared transmission is determined in the spectral range of 3.8 to 4.15 $\mu$m.

7. Method according to any of claims 1 to 6, **characterized in that** the content of unburnt hydrocarbons in the exhaust gas is also determined and the value obtained is used for computation of lambda or the air/fuel ratio.

8. Method according to claim 7, **characterized in that** the content of unburnt hydrocarbons is obtained by determining the infrared absorption in the exhaust gas, using a spectral range whithin which the various hydrocarbon components are characterized by approximately the same extinction, for instance, 3.465 $\pm$ 0.05 $\mu$m, the measured values being corrected with the use of the absorption caused by the carbon particles.

9. Method according to any of claims 1 to 8, **characterized in that** the CO content in the exhaust gas is determined in addition, and is entered into the computation of lambda or the air/fuel ratio.

10. Method according to claim 9, wherein the CO content in the exhaust gas is determined by measuring infrared transmission, preferably in the spectral range of 4.4 to 4.9 $\mu$m, **characterized in that** this value is corrected by means of the absorption of carbon particles at this wavelength.

11. Method according to any of claims 1 to 10, **characterized in that** the absolute humidity of the ambient air is measured by an additional humidity sensor, and the value obtained from this measurement is used for correcting the secondary, non-linear changes in the values measured for $H_2O$ concentrations resulting from the humidity of the ambient air, or rather, the ensuing values obtained for lambda or the air/fuel ratio.

12. A device for implementation of the method according to any of claims 1, 2 and 5 to 11, with a measuring cell (1) traversed by the exhaust gas of the combustion system, a filter (4) and a detector (5) receiving the radiation of the source being placed in the radiation path of an electromagnetic radiation source one behind the other, **characterized in that** the central wavelength and half-band width of the filter are tuned to measuring the concentration of water vapour in the exhaust gas, and that the detector (5) is provided with an evaluation unit (6) for determining the $H_2O$ component in the exhaust gas, and with a computing unit (12) for computing lambda and/or the air/fuel ratio by comparing the measured value to a fictitious value for the concentration of water vapour obtained for a stoichiometric combustion process, computation taking into account an elementary chemical analysis of the fuel showing the C:H:O ratio of the fuel, and the oxygen component of the ambient air or the gas supplied for fuel combustion.

13. A device for implementation of the method according to any of claims 3 to 11, with a measuring cell (1) traversed by the exhaust gas of the combustion system, a filter (4) and a detector (5) receiving the radiation of the source being placed in the radiation path of an electromagnetic radiation source one behind the other, **characterized in that** provisions are made for a reference cell (2) which is swept by the ambient air or the gas supplied for combustion, and for a filter disk or a chopper (4a), the measuring cell (1) and the reference cell (?) being placed between the electromagnetic radiation source (3) and the filter disk or chopper (4a) directing the radiation path through the measuring cell (1) and the reference cell (2) in alternating order, and that an evaluation unit (6) is provided, in which the difference is formed between the value measured for the exhaust gas and that for the ambient air or gas supplied for fuel combustion, such that the influence of the humidity of the ambient air on the value obtained for the concentration of water vapour or on lambda is compensated automatically, and further that a computing unit (12) is provided for computing lambda and/or the air/fuel ratio by comparing the measured value to a fictitious value for the concentration of water vapour obtained for a stoichiometric combustion process, computation taking into account an elementary chemical analysis of the fuel showing the C:H:O ratio of the fuel, and the oxygen component of the ambient air or the gas supplied for fuel combustion, and further that the central wavelength and half-band width of the filter are tuned to measuring the concentration of water-vapour, the filter transmitting in the wave range of 2.4 to 2.8 μm, or, alternatively, in the 1.8 to 2.0 μm range.

14. Device according to claim 12 or 13, **characterized in that** the filter is provided with several filter elements (4), one of which is tuned to measuring the concentration of water vapour by its particular central wavelength and half-band width, this element (4) transmitting in the wave range of 2.4 to 2.8 μm, or, as an alternative, in the 1.8 to 2.0 μm range, and at least one other filter element (4) being provided, which is tuned to measurement of another gas component, such as CO, HC or C particles, which additional measurement is used to correct the value obtained for the concentration of water vapour and/or the lambda value, in a correcting unit (7) located between evaluation unit (6) and computing unit (12).

15. Device according to claim 14, **characterized in that** one filter element (4) is tuned to measurement of the total mass of carbon particles by a suitable central wavelength and half-band width, and that it transmits in a wave range of 3.8 to 4.15 μm preferably.

16. Device according to claim 15, **characterized in that** the filter element (4), which is tuned to measurement of the total mass of carbon particles, has a central wavelength of 3.9 to 4.1 μm, and a half-band width of 2 to 5 %.

17. Device according to any of claims 14 to 16, **characterized in that** one filter element (4) is tuned to measurement of the content of unburnt hydrocarbons by suitable central wavelength and half-band width, transmitting at a wavelength at which the various hydrocarbon components have approximately the same extinction, e.g. at 3.465 μm.

18. Device according to claim 17, **characterized in that** the filter element (4), which is tuned to measurement of the content of unburnt hydrocarbons, has a central wavelength of 3.465 ± 0.05 μm and a half-band width of 2-5%.

19. Device according to any of claims 14 to 18, **characterized in that** one filter element (4) is tuned to measurement of the CO component by a suitable central wavelength and half-bared width such that it transmits in a wave range of 4.4 to 4.9 μm preferably.

20. Device according to claim 19, **characterized in that** the filter element (4) which is tuned to measurement of the CO component, has a central wavelength of 4.5 to 4.8 μm and a half-band width of 2 to 5 %.

21. Device according to any of claims 12 to 20, **characterized in that** a sensor (8) is provided, which is connected with the correcting unit (7) and, preferably, with an additional evaluation unit (11), and which supplies measurement values, for instance, for the pressure and humidity of the ambient air, or the temperature in the measuring cell (1) or reference cell (2).

22. Device according to any of claims 12 to 21, **characterized in that** a transmitter (9) delivering constant physical parameters is provided, which is connected with the correcting unit (7).

23. Device according to any of claims 12 to 22, **characterized in that** the filter or filter element (4) for measuring water vapour concentration is designed as an interference filter in the $H_2O$ band range with a central wavelength of 2.55 to 2.63 μm and a half-band width of 2% to 5% and a 5% cut-off value at a wavelength of $\leq 2.65$ μm.

**Revendications**

1. Procédé pour la mesure de Lambda et/ou du rapport air/carburant de dispositif de combustion, notamment de moteurs à combustion interne, par la mesure ou l'analyse de différents composants du carburant, de l'air environnant servant à la combustion du carburant ou bien du gaz d'alimentation, servant à la combustion du carburant, et des gaz d'échappement, procédé caractérisé en ce que la concentration de vapeur d'eau des gaz d'échappement est mesurée d'une façon en soi connue, comme par exemple par absorption d'infrarouge, et en ce que le Lambda et/ou le rapport air/carburant est déterminé au moyen de cette valeur de mesure en liaison avec une analyse chimique élémentaire des composants du carburant qui indique le rapport C:H:O du carburant, ainsi qu'en liaison avec la teneur en oxygène de l'air environnant ou du gaz d'alimentation, servant à la combustion du carburant, le calcul reposant essentiellement dans ce cas sur une comparaison entre la valeur mesurée de la concentration en vapeur d'eau des gaz d'échappement et une valeur fictive calculée d'après le rapport C:H:O précité et la teneur en oxygène précitée de la concentration en vapeur d'eau se présentant lors d'une combustion stoechiométrique.

2. Procédé selon la revendication 1, caractérisé en ce qu'en outre, on mesure la concentration en vapeur d'eau de l'air environnant ou du gaz d'alimentation qui sert à la combustion du carburant et en ce que cette valeur est prise en compte lors du calcul de Lambda.

3. Procédé pour la mesure du Lambda et/ou du rapport air/carburant de dispositif de combustion, notamment de moteurs à combustion interne, par la mesure ou l'analyse de différents composants du carburant, de l'air environnant servant à la combustion du carburant ou bien du gaz d'alimentation, servant à la combustion du carburant, et des gaz d'échappement, procédé caractérisé en ce que la différence de la concentration en vapeur d'eau des gaz d'échappement par rapport à celle de l'air environnant ou bien du gaz d'alimentation servant à la combustion du carburant, est mesurée par la détermination de l'absorption d'un rayonnement électromagnétique dans un domaine spectral de 2,4 à 2,8 ou bien en variante de 1,8 à 2 $\mu$m, auquel cas les gaz d'échappement traversent une cuvette de mesure (1) tandis que l'aire environnant ou bien le gaz d'alimentation servant à la combustion du carburant traverse une cuvette de référence (2), et en ce que le Lambda et/ou le rapport air/carburant est déterminé au moyen de cette valeur de mesure en liaison avec une analyse chimique élémentaire des composants du carburant, qui indique le rapport C:H:O du carburant, ainsi qu'en liaison avec la teneur en oxygène de l'air environnant ou bien du gaz d'alimentation servant à la combustion du carburant, le calcul reposant essentiellement dans ce cas sur une comparaison entre la valeur mesurée de la concentration de vapeur d'eau des gaz d'échappement et une valeur fictive de la concentration en vapeur d'eau, calculée à partir du rapport C:H:O précité et de la teneur en oxygène précitée, qui se présente lors d'une combustion stoechiométrique.

4. Procédé selon la revendication 3, caractérisé en ce que la mesure de la concentration en vapeur d'eau est effectuée au moyen d'un filtre d'interférence dans le domaine des bandes de $H_2O$ avec une longueur d'onde centrale de 2,55 à 2,63 $\mu$m et une largeur de demi-valeur de 2 % à 5 %, ce filtre ayant une valeur de coupure de 5 % pour une longueur d'onde inférieure ou égale à 2,65 $\mu$m.

5. Procédé selon l'une des revendications 1 à 4, caractérisé en ce que la valeur de mesure de la concentration en vapeur d'eau des gaz d'échappement est corrigée par une mesure de la concentration en particules de carbone contenues dans l'échantillon.

6. Procédé selon l'une des revendications 1 à 5, caractérisé en ce que pour la détermination de la masse totale des particules de carbone, on détermine la transmission infrarouge dans un domaine spectral de 3,8 à 4,15 $\mu$m.

7. Procédé selon l'une des revendications 1 à 6, caractérisé en ce qu'en outre la teneur en hydrocarbure non brûlé dans les gaz d'échappement est mesurée, cette teneur en hydrocarbure non brûlé étant introduite dans le calcul du Lambda ou du rapport air/carburant.

8. Procédé selon la revendication 7, caractérisé en ce que la teneur en hydrocarbure non brûlé est déterminée en déterminant l'absorption infrarouge, auquel cas on utilise de préférence un domaine spectral dans lequel les différents composants des hydrocarbures présentent à peu près la même extinction, par exemple pour 3,465 ± 0.05 $\mu$m et pour corriger cette mesure, il fait appel à l'absorption provoquée par les particules de carbone.

9. Procédé selon l'une des revendications 1 à 8, caractérisé en ce qu'en outre la teneur en CO dans les gaz d'échappement est mesurée, cette teneur CO étant introduite dans le calcul du Lambda ou du rapport air/carburant.

10. Procédé selon la revendication 9, dans lequel la détection de la teneur en CO des gaz d'échappement s'effectue en mesurant la transmission infrarouge, de préférence dans le domaine spectral de 4,4 à 4,9 $\mu$m, procédé caractérisé en ce que cette valeur est corrigée par l'absorption des particules de carbone pour ces longueurs d'onde.

11. Procédé selon l'une des revendications 1 à 10, caractérisé en ce que l'unité absolue de l'air environnant est mesurée au moyen d'un indicateur supplémentaire de valeur de mesure d'humidité, et cette valeur mesurée est utilisée pour corriger les variations secondaires non linéaires, résultant de l'humidité de l'air environnant, des valeurs de mesure de concentration en $H_2O$ ou bien du Lambda ou du rapport air/carburant mesuré à partir de ces valeurs.

12. Dispositif pour la mise en oeuvre du procédé selon l'une des revendications 1, 2 et 11, dans lequel il est prévu successivement sur le trajet du rayonnement d'une source de rayonnement électromagnétique une cuvette de mesure (1) traversée par les gaz d'échappement du dispositif de combustion, un filtre (4) est enfin un détecteur (5) recevant le rayonnement de la source, dispositif caractérisé en ce que le filtre est accordé à la mesure de la concentration en vapeur d'eau des gaz d'échappement par la longueur d'onde centrale et la largeur de demi-valeur, et en ce que au détecteur (5) sont raccordées une unité d'exploitation (6) pour déterminer la teneur en $H_2O$ des gaz d'échappement ainsi qu'une unité de calcul (12) pour calculer le Lambda et/ou le rapport air/carburant au moyen d'une comparaison entre la valeur de mesure précitée et une valeur fictive de la concentration en vapeur d'eau pour une combustion stoechiométrique, tandis que dans le calcul est introduite l'analyse chimique élémentaire du carburant qui indique le rapport C:H:O du carburant, ainsi que la teneur en oxygène de l'air environnant ou du gaz d'alimentation servant à la combustion du carburant.

13. Dispositif pour la mise en oeuvre du procédé selon l'une des revendications 3 à 11, dans lequel il est successivement prévu sur le trajet du rayonnement d'une source de rayonnement électromagnétique, une cuvette de mesure (1) traversée par les gaz d'échappement du dispositif de combustion, un filtre (4) et enfin un détecteur (5) recevant le rayonnement de la source, dispositif caractérisé en ce qu'il est prévu une cuvette de référence (2) parcourue par l'air environnant ou l'air d'alimentation prévu pour la combustion, ainsi qu'une roue de filtration ou un vibreur (4a), la cuvette de mesure (1) et la cuvette de référence (2) étant disposées entre la source de rayonnement électromagnétique (3) et la roue de filtration ou le vibreur (4a), qui dirige alternativement la marche des rayons à travers la cuvette de mesure (1) et à travers la cuvette de référence (2), et en ce qu'il est prévu une unité d'exploitation (6) dans laquelle est formée la différence entre la valeur de mesure pour les gaz d'échappement et la valeur de mesure pour l'air environnant ou le gaz d'alimentation servant à la combustion du carburant, de sorte qu'ainsi, des influences de l'humidité de l'air environnant sur la valeur de mesure de la concentration en vapeur d'eau ou bien sur le Lambda sont automatiquement compensées, et en ce qu'en outre, une unité de calcul (12) est raccordée pour le calcul du Lambda et/ou du rapport air/carburant au moyen d'une comparaison entre la valeur de mesure précitée et une valeur fictive de la concentration en vapeur d'eau pour une combustion stoechiométrique, tandis que dans le calcul est introduite l'analyse chimique élémentaire du carburant qui indique le rapport C:H:O du carburant, ainsi que la teneur en oxygène de l'air environnant ou de l'air d'alimentation servant à la combustion de carburant, et en ce qu'en outre, le filtre est accordé à la mesure de la concentration en vapeur d'eau par la longueur d'onde centrale et la largeur de demi-valeur, auquel cas le filtre est perméable dans le domaine des longueurs d'onde de 2,4 à 2,8 $\mu$m ou bien en variante dans le domaine de 1,8 à 2 $\mu$m.

14. Dispositif selon l'une des revendications 12 ou 13, caractérisé en ce que le filtre comporte plusieurs garnitures de filtration (4) dont une est accordée à la mesure de la concentration en vapeur d'eau par la longueur d'onde centrale et la largeur de demi-valeur, cette garniture de filtration (4) étant perméable dans le domaine des longueurs d'onde de 2,4 à 2,8 $\mu$m ou bien en variante dans le domaine de 1,8 à 2 $\mu$m, tandis qu'il est prévu au moins une autre garniture de filtration (4) qui est accordée à la mesure d'un autre composant des gaz tels que CO, HC ou particules de carbone, cette autre mesure dans un organe de correction (7) disposée entre l'unité d'exploitation (6) et l'unité de calcul (12) servant à corriger la valeur de mesure de la concentration en vapeur d'eau ou bien de la valeur Lambda.

**15.** Dispositif selon la revendication 14, caractérisé en ce qu'une garniture de filtration (4) est accordée par la longueur d'onde centrale et la largeur de demi-valeur à la mesure de la masse totale des particules de carbone et est de préférence perméable dans un domaine de longueur d'onde de 3,8 à 4,15 μm.

**16.** Dispositif selon la revendication 14, caractérisé en ce que la garniture de filtration (4) qui est accordée à la mesure de la masse totale des particules de carbone comporte une longueur d'onde centrale de 3,9 à 4,1 μm et une largeur de demi-valeur de 2 à 5 %.

**17.** Dispositif selon l'une des revendications 14 à 16, caractérisé en ce qu'une garniture de filtration (4) est accordée par la longueur d'onde centrale et la largeur de demi-valeur à la mesure de la teneur en hydrocarbure non brûlé et est de préférence perméable pour une longueur d'onde pour laquelle les différents composants des hydrocarbures ont à peu près la même extinction tels que par exemple à 3,465 μm.

**18.** Dispositif selon la revendication 17, caractérisé en ce que la garniture de filtration (4) qui est accordée à la mesure de la teneur en hydrocarbure non brûlé, comporte une longueur d'onde centrale de 3,465 ± 0.05 μm et une largeur de demi-valeur de 2 à 5 %.

**19.** Dispositif selon l'une des revendications 14 à 18, caractérisé en ce qu'une garniture de filtration (4) est accordée par la longueur d'onde centrale et la largeur de demi-valeur à la mesure de la teneur en CO et est de préférence perméable dans un domaine de longueur d'onde de 4,4 à 4,9 μm.

**20.** Dispositif selon la revendication 19, caractérisé en ce que la garniture de filtration (4) qui est accordée à la mesure de la teneur en CO comporte une longueur d'onde centrale de 4,5 à 4,8 μm et une largeur de demi-valeur de 2 à 5 %.

**21.** Dispositif selon l'une des revendications 12 à 20, caractérisé en ce qu'il est prévu un indicateur de valeur de mesure (8) qui est relié à l'organe de correction (7) et de préférence à une autre unité d'exploitation (11) et qui délivre des valeurs de mesure telles que la pression de l'air environnant, l'humidité de l'air environnant, la température dans la cuvette de mesure (1) ou bien la cuvette de référence (2).

**22.** Dispositif selon l'une des revendications 12 à 21, caractérisé en ce qu'il est prévu un indicateur (9) délivrant des paramètres physiques constants et qui est relié à l'organe de correction (7).

**23.** Dispositif selon l'une des revendications 12 à 22, caractérisé en ce que te filtre ou bien l'unité de filtration (4) pour la mesure de la concentration en vapeur d'eau revêt la forme d'un filtre d'interférence dans le domaine de bandes de $H_2O$ avec une longueur d'onde centrale de 2,55 à 2,63 μm et une largeur de demi-valeur de 2 à 5 % ainsi qu'une valeur de coupure de 5 % pour une longueur d'onde inférieure ou égale à 2,65 μm.

*Fig. 1*

*Fig. 2*

*Fig. 3*

16